# EUROPEAN PATENT APPLICATION

(11) **EP 1 047 210 A2**
(43) Date of publication of application: **25.10.2000**
(21) Application number: 00303367.7
(22) Date of filing: 20.04.2000
(51) Int. Cl.: H04B 7/155

(54) **Remote hub arrangement for deploying cell sites especially along a corridor**

(30) Priority: 22.04.1999 US 130611 P; 23.04.1999 US 130819 P; 03.11.1999 US 432617
(71) Applicant: Transcept, Inc., Manchester, NH 03103 (US)
(72) Inventor: Sabat, John Jr., Merrimack, New Hampshire 03054 (US)
(74) Representative: Greenwood, John David

(57) **Abstract**

A method and arrangement for a wireless communication system is disclosed that is particularly suited for efficiently covering long highway corridors in regions having a low subscriber demand. The method involves arranging the cell antennae into groups of three, with a central antenna operating as a full base station with radio equipment and land line circuits, and having the remaining two antenna serve as remote relay systems. The remote relays utilize an up converted broadband data link operating in an unlicensed radio band. In a preferred embodiment, the radio signals are converted from the 1.9 GHz licensed PCS band to a 2.4 GHz unlicensed band.

## Description

### BACKGROUND OF THE INVENTION

The Personal Communication System (PCS) wireless service business requires that operators pay for a license to operate in a given area. As a condition of that license, the service provider must actually build a working system. This is known as a build out requirement. Many license purchasers in areas of low population density have therefore found that the expense of providing a complete base station at each cell tower site uneconomical. Typically, each cell site requires a high speed land line which connects the cell system to the Public Switch Telephone Network (PSTN). These land lines, typically so-called T1 lines, can handle as many as 24 phone calls at a time. However, a T1 line typically leases for several hundred dollars per month. In addition, the required Base Transceiver Station (BTS) equipment required to implement radio communication in each cell may cost tens of thousands of dollars per channel.

In low population density regions such as the desert and plains, each cell site is very unlikely to have as many as 24 calls originating or terminating with a cellular subscriber who is within the typical range of the cell site, and thus the full capacity of the leased line and purchased radio equipment is not utilized. Thus, a problem exists within the PCS art of economically providing cellular telephone service in low density regions, particularly along remote highways. It would be a benefit to provide a method of reducing the cost of PCS cell sites in such low density regions while still providing adequate service levels.

### SUMMARY OF THE INVENTION

The present invention is a mobile telephone, Personal Communication Services (PCS), or other cell-based wireless system in which central hub sites are surrounded by remote relay station sites. The radio signaling techniques involved reduce the construction and operating costs of the system without reducing the level of service for regions having low cellular call density.

More particularly, wireless data links operating in an unlicensed radio band, such as the Industrial Science and Medical (ISM) band, carry digitized traffic signals between the hub base stations and the remote relay base stations. Each of the remote stations thus has a frequency converter for up and down converting radio signal frequencies used for radio propagation in the cells to the unlicensed carrier frequencies used in the data links.

The communication system comprises a first plurality of spaced antennas, each one having two way communication capability with cellular subscribers within range of the antenna. A second plurality of antennas is selected from the first plurality to form base stations or hub cell sites each having at least one high speed data link. In a preferred embodiment, the hub cell sites have a receiver for the data links in the unlicensed band from the remote cell sites, a broadband spread spectrum demodulator to produce a baseband traffic signal, and a translator to couple the signal to the base station equipment in the hub cell site.

The remaining antennas are deployed at remote stations, each one having at least one data link radio transceiver for communication with an adjacent central antennas. In a preferred embodiment, the PCS signal frequencies in a cell associated with a remote station are converted from the 1.9 GHz licensed band to the 2.4 GHz or 5.6 GHz unlicensed band for transport over the data links. The data links preferably use spread spectrum or other broadband signalling methods. The remote stations also have a down converter which takes traffic signals from cellular subscribers within the radio coverage area of the remote cell and shifts the signal frequency to produce a translated traffic signal. A bandlimiter accepts the signal and sends the translated traffic signal to the broadband modulator, which produces a traffic signal for transmission to an upconverter. The upconverter shifts the signal frequency to the unlicensed band for transmission to the hub site as the data link signal.

### BRIEF DESCRIPTION OF THE DRAWINGS

The foregoing and other objects, features and advantages of the invention will be apparent from the following more particular description of preferred embodiments of the invention, as illustrated in the accompanying drawings in which like reference characters refer to the same parts throughout the different views. The drawings are not necessarily to scale, emphasis instead being placed upon illustrating the principles of the invention.
Fig. 1 is a block diagram of a Time Division Multiple Access (TDMA) cellular or personal communication system illustrating how the invention may be deployed.
Fig. 2 is a more detailed block diagram of the TDMA hub.
Fig. 3 is a more detailed block diagram of the TDMA remote.
Fig. 4 is a block diagram of a power amplifier and antenna arrangement.
Fig. 5 is a diagram illustrating signal flows within a six carrier TDMA hub.
Fig. 6 is a detailed diagram showing signal flows within a six carrier TDMA remote.

### DETAILED DESCRIPTION OF A PREFERRED EMBODIMENT

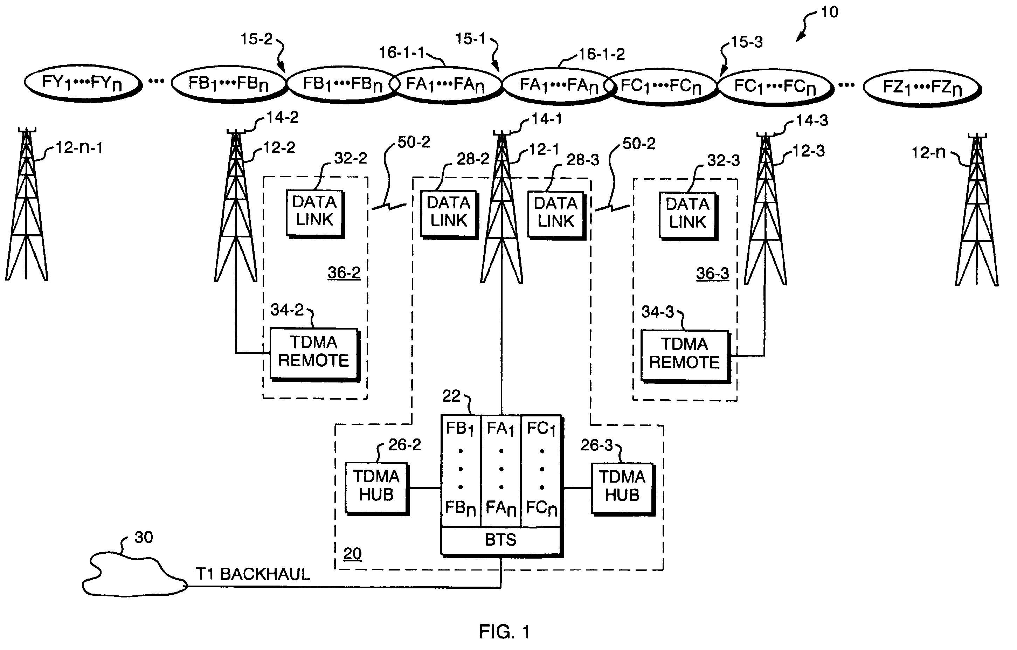

Turning attention now to Fig. 1, the present invention provides a technique for efficiently deploying wireless communication equipment such as in a cellular or personal communication system (PCS) environment. The invention allows centrally located base transceiver station (BTS) equipment and landline interfaces to be shared among multiple cell sites.

In the preferred embodiment, the invention is arranged to implement wireless service along a corridor such as along a highway. In general, only the central base stations contain the BTS equipment. Wireless data links operating in an unlicensed radio band are then used to communicate traffic signals between the central base station and other remote cells which are adjacent to the central cell.

More particularly now, a wireless communication system 10 includes a number of towers 12-1, 12-2, 12-3, ..., 12-n-1, 12-n. The towers 12 are arranged along a highway or other narrow corridor along which it is desirable to provide wireless communication service such as cellular mobile telephone or personal communication services (PCS)at minimum cost. Coverage is not generally desired outside of the narrow corridor. For example, the invention may be of particular use in providing cellular service along a highway in an otherwise sparsely populated area.

The towers 12 each have a respective antenna or antennas 14 associated with it. The radio coverage provided along the corridor can thus be thought of as encompassing a center cell site 15-1, west cell site 15-2, and east cell site 15-3.

While in a standard cell site, the antennas 14 would typically provide an omnidirectional and/or 120 degree three-sector arrangement, in this particular embodiment, the antennas provide coverage in two opposing relatively narrow beamwidth sectors. The two sectors are deployed in opposite directions generally away from the center of the tower 12 along the corridor. For example, with respect to antenna 14-1, a first sector 16-1-1 extends in a direction generally to the east of tower 12-1 in a relatively narrow beamwidth. The second sector 16-1-2 extends in a direction generally to the west of the tower 12-1 with the similarly narrow beamwidth, providing coverage only along the corridor. In a preferred embodiment, the sector 16-1-1 and 16-1-2 are provided by two separate radiating element structures which are electrically combined with suitable signal combining circuits.

The tower 12-1 is considered to be the central tower site within a group of three towers 12 encompassing the tower 12-2 which is located to the west of tower 12-1 and tower 12-3 located to the east of tower 12-1. The center tower 12-1 serves as a hub responsible for supporting wireless communication in the cell sites 15-2 and 15-3 covered by the adjacent remote towers 12-2 and 12-3. In accordance with the invention, only the center tower 12-1 has associated with it a complete suite of base station equipment 20. Specifically, this base station equipment 20 consists of a Base Transceiver System (BTS) 22, providing at least three pairs or sets of radio channels in the forward link and reverse link direction, and a first 26-2 and second hub 26-3, each of which is associated with a corresponding data link 28-2 and 28-3.

The BTS 22 provides radio transceiving equipment in accordance with the particular air interface used by the mobile units traveling within the cells. In the preferred embodiment, this is a Time Division Multiple Access (TDMA) type air interface such as that specified by the Telecommunications Industry Association (TIA) IS-136 Standard. However, it should be understood that other air interface standards may be used with the invention. In the illustration of Fig. 1, the notation "F1" indicates a pair of 30 kilohertz (khz) radio frequency carriers encoded to provide both forward and reverse link communication.

In the illustration, the radio carrier pairs FA1 through FAn are allocated to the first cell site associated with the tower 12-1, the radio carrier pairs FB1 through FBn are associated with the tower 12-2 located to the west, and the radio carrier pairs FC1 through FCn are associated with and used in the tower 12-3 located to the east, and so on. The different radio carrier frequencies are used in different adjacent cells associated with the towers 12 in a manner which is well known in the art so that as mobile units travel between the coverage areas of adjacent towers 12, they are handed off to operate on different radio carriers FB1, FB2, ..., FB6, and so on. Thus, in the illustrated embodiment, the BTS 22 located at the hub site 12-1 has at least six radio transceivers, or the equivalent thereof.

The wireline signals produced by the BTS 22 is provided over a baseband interface such as the ANSI T1 format signaling. Such signaling provides a backhaul connection to a central office or other network 30 to which call connections are to be made.

The TDMA hub 26-2 in general serves to route signals to and from the antennas 14-2 associated with the west tower 12-2 and the BTS equipment 22 dedicated to servicing such connections. For example, radio carriers FB1 through FBn are allocated for use in the cell site 15-2 associated with the cell tower 12-2. However, the TDMA hub 26-2 is physically located at the site of the center tower 12-1.

The TDMA hub 26-2 couples such signals through wireless data link equipment 28-2. The wireless data link 28-2 in turn forwards such signals to the analogous data link equipment 32-2 located at the site of the west tower 12-2. This data link typically is available equipment providing digital data communication in an unlicensed radio band such as in the Industrial Science and Medical (ISM) radio band at 2.4 GHz. Data link equipment 28-2 and 32-2 may, for example, operate providing a 4 megabits per second (Mbps) data rate using direct line of sight communication dish type antennas.

The TDMA remote equipment 34-2 also located within the equipment 36-2 located at the tower 12-2 converts the data link signals to an appropriate format for transmission over the antenna equipment 14-2. The east cell site 15-3 similarly has associated with it radio equipment 36-3, including a data link 32-3 and TDMA remote equipment 34-3.

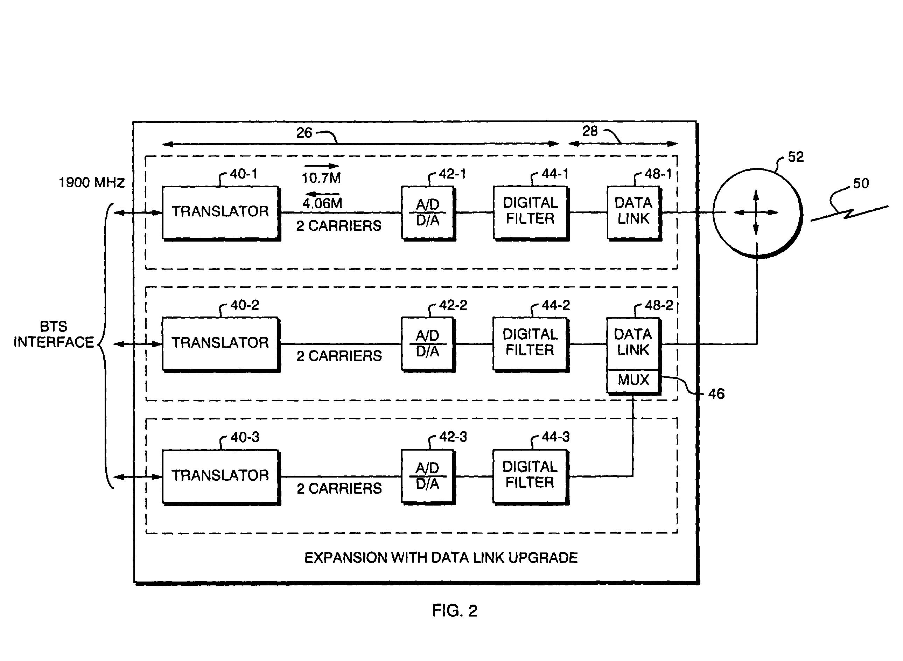

Turning attention now to Fig. 2 more particularly, an exemplary TDMA hub 26 and associated data link 28 will be described in greater detail. The TDMA hub 26 is more particularly seen to include a translator 40-1, analog-to-digital and digital-to-analog conversion circuits 42-1, and digital filtering circuit 44-1. It should be understood that signals are traveling in a full duplex format such that both forward link and reverse link direction signals are being processed by the TDMA hub 26.

In the forward link direction, the hub 26 first accepts radio signals from the BTS 22. such radio signals are, in the preferred embodiment, digitally modulated at a radio frequency carrier in the cellular radio band of from approximately 800-900 MHz, or Personal Communication Services (PCS) radio signals located in the PCS radio band from approximately 1850-1990 MHz. In the forward link direction, that is, in the direction of signals traveling from the network 30 towards mobile units located in the cells, such as the west cell 15-2, the translator down converts the carrier signals FB1 through FBn from their radio frequency carrier (RF) of 1.9 GHz to a convenient intermediate frequency carrier (IF) such as 10.7 MHz. An alternate embodiment of the conversion process translates the RF carriers to baseband quadrature signals. In a reverse link direction, that is, for signals traveling from the mobile units located in the west cell 15-2 towards the network 30, radio frequency signals are translated from an intermediate carrier frequency such as 4.95 MHz up to the BTS compatible radio frequency carrier in the 1900 MHz band.

Continuing with the discussion of the forward link signaling, the down converted signal provided by the translator 40-1 is fed to analog-to-digital converter 42-1. The analog-to-digital converter may, for example, be operating at a sample rate of 25.6 megasamples per second (msps) with 12 bit resolution. The digitized signal is then provided to a digital filter 44-1 to provide a decimated complex valued digital output signal. This signal may, for example, be a 28 bit per sample complex signal at a data rate of 50 kilohertz (kHz).

The data link 28 then accepts this digital data stream and formats it for transmission over the unlicensed radio band link 50. This data link may be provided at an unlicensed radio carrier frequency of 2.4 GHz using broadband quadrature phase shift key (QPSK) modulation. In a preferred embodiment, spread spectrum modulation techniques are used to impress this modulation onto the unlicensed carrier; however, other broadband techniques may be used. Circuits for implementing such data links are available in the integrated circuit chip set sold as the Prism chip set sold by Harris Corporation of Palm Bay, Florida. This digitally modulated radio signal is then coupled to suitable antenna equipment such as a dish 52.

The digital data stream provided over the data link thus carries each of the two carriers information signals wherein each information signal consists of an in-phase channel (I) and quadrature channel (Q), each of which are 14 bits wide per sample, at the 50 kHz rate, for a composite data rate of approximately 1.4 Mbps.

Each of the TDMA hubs 26 in embodiment described so far supports a minimum of two full duplex carriers. However, additional carriers can be provided over the same wireless data link 50. For example, an additional two carriers for a total of four carriers can be supported by duplicating the translator as a second translator by duplicating the equipment as a second translator 40-2, second AD and DA conversion circuits 42-2, second digital filter and second data link equipment 28. In this instance, the data link signal may be coupled to the dish 52 with an orthogonal polarization than to the data link signal coupled in the first signal chain. For example, the first signal chain may be provided with a horizontal polarization and the second signal chain with a vertical polarization.

With the data link upgrade supporting data rates in excess of 10 megabits per sample, such as now being provided by the more recently released upgraded Prism chips, the higher aggregate data rate may support an additional two carriers through the use of a third translator 40-3, third A to D and D to A circuits 42-3, and third digital filter 44-3. Such additional signals can be accommodated on the higher rate data link by the first use of a multiplexer 46 prior to inputting the third data stream into the data link circuit 48-2.

It should be understood that the data link preferably uses a different radio carrier such as 2.412 GHz in the forward link direction from the radio carrier such as 2.462 GHz used in the reverse link direction.

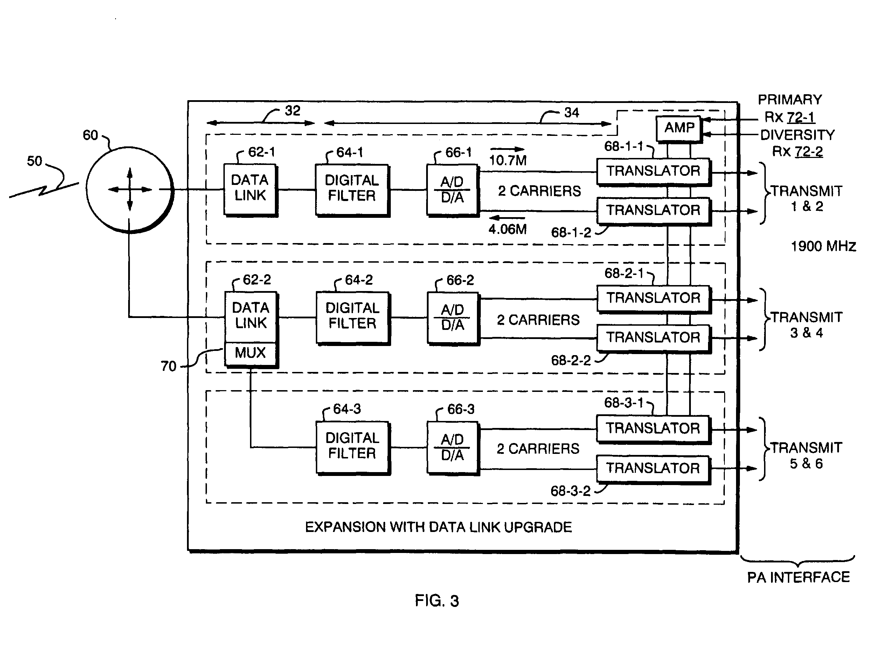

Turning attention now to Fig. 3, the TDMA remote 34 and associated data link 32 located at the west cell site 15-2 or east cell site 15-3 will be described in greater detail. Again with reference to signals in the forward link direction, signaling received from the associated dish 60 are first fed from the dish 60 to the data link 62-1 and associated TDMA remote 34-2, including digital filters 64-1, A to D and D to A converters 66-1, and translators 68-1-1 and 68-1-2. The approximately 1.4 megabits per second signal provided by the data link 62-1 is first processed by the digital filter 64-1 to provide an anti-aliasing and interpolation function. This signal is the fed to the D to A converter 66-1 to produce an intermediate carrier frequency signal. In the forward link direction, this signal is in a range of from approximately 10.7 MHz and is fed to a first translator 68-1-1. The translator 68-1-1 upcoverts the signal to a format suitable for transmission over the air within the cell 15. For example, the translator converts the signal received in the 10.7 MHz intermediate frequency carrier to a PCS compatible radio frequency carrier in the range of approximately 1900 MHz. The signal is then transmitted in the forward link direction.

In the receive direction (from the perspective of the TDMA remote 34-2), a primary receive channel and a diversity receive channel 72-1 and 72-2 are supported. These receive signals in a reverse link direction are first fed to a amplifier to a respective one of the translators 68-1-1 or 68-1-2. As will be understood shortly, each of these translators actually must support the transmission of four carrier signals to implement a primary and diversity receive channel for each of the transmit carriers 1 and 2.

These signals are then translated down to the intermediate frequency carrier range of 4.95 MHz and fed to the A to D converter 66-1 and digital filtering function 64-1. In this instance, because of the bandwidth required signal compression algorithms may need to be used by the digital filter 64-1 in order to fit the approximately 5.8 megasamples per second data within the (4.0) megasample per second maximum data rate supported by the prism data link 62-1. Alternatively higher rate data link circuits may be provided.

Similar to the implementation of the TDMA hub 26 described in Fig. 2, the circuits may be duplicated for the data link 32 and TDMA remote 34 to provide a third and fourth transmit and receive channel and a fifth and sixth transmit and receive channel. In such an instance, a multiplexer 70 is used to combine the signals to and from the second data link circuit 62-2 and a third digital filter 64-3. As before, the horizontally polarized signal is provided to the first data link circuit 62-1 and vertically polarized signal to the second data link 62-2. The fully implemented embodiments of Figs. 2 and 3 therefore provide three times the capacity or up to six carriers per cell in each direction.

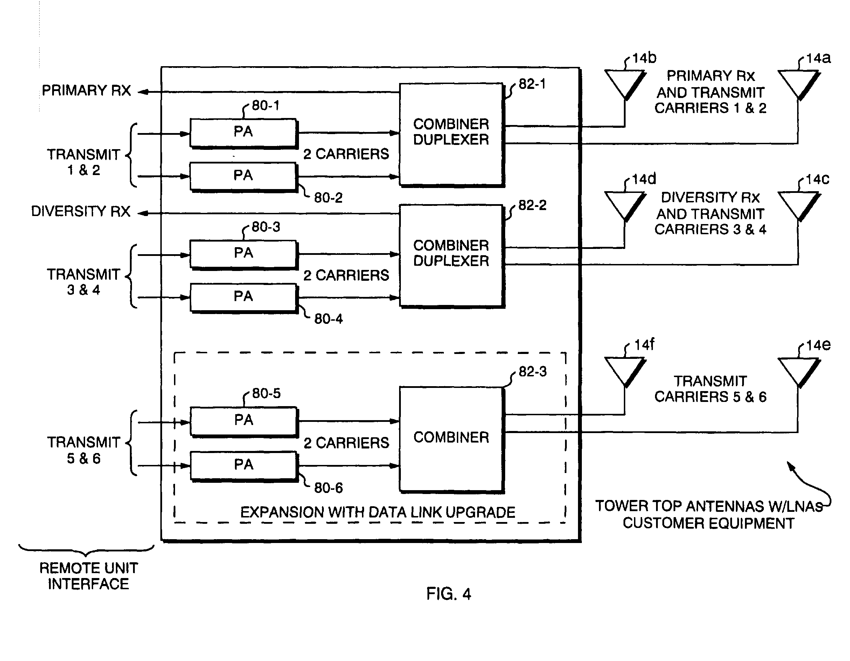

Fig. 4 shows an arrangement of power amplifiers and combining duplexing networks to connect the transmit and receive signals between the antennas 14 and TDMA remote circuitry 34. In the transmit direction, there is a power amplifier 80-1, 80-2, 80-3, 80-4, 80-5, and 80-6 associated with each of the transmit signal channel numbers 1, 2, 3, 4, 5, and 6. Each signal path provided by one of the power amplifiers 80 contains a single radio carrier signal. A combiner/duplexer 82-1 couples two radio carrier signals from two power amplifiers to primary transmit antennas 14a and 14b. These antennas 14a and 14b also serve as primary reception antennas providing signals through the combiner duplexer as the primary received signal. The antennas 14a and 14b are those associated with pointing respectively in the easterly and westerly direction in the example being described.

Similarly, a second signal chain consisting of the power amplifiers 80-3 and 80-4 associated with the transmit channel 3 and transmit channel 4 feeds a combiner/duplexer 82-2 and transmit carrier antennas 14c and 14d. These antennas 14c and 14d serve as the diversity reception antennas providing the diversity received signal through the combiner duplexer 82-2. In the event that a fifth and sixth transmit carrier are required, a third set of power amplifiers 80-5 and 80-6 and combiner 82-3 provide signals to the transmit carrier antennas 14e and 14f transmitting channels 5 and 6.

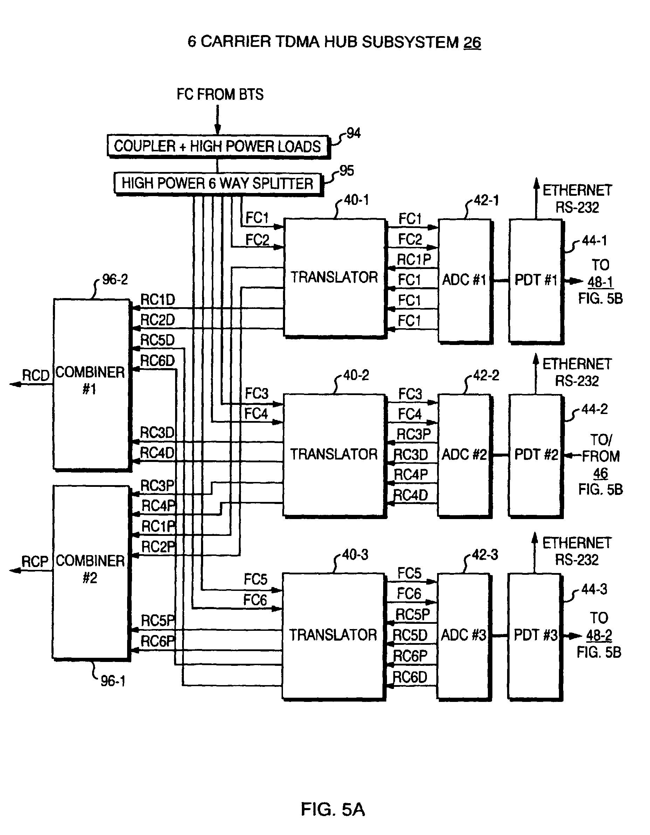

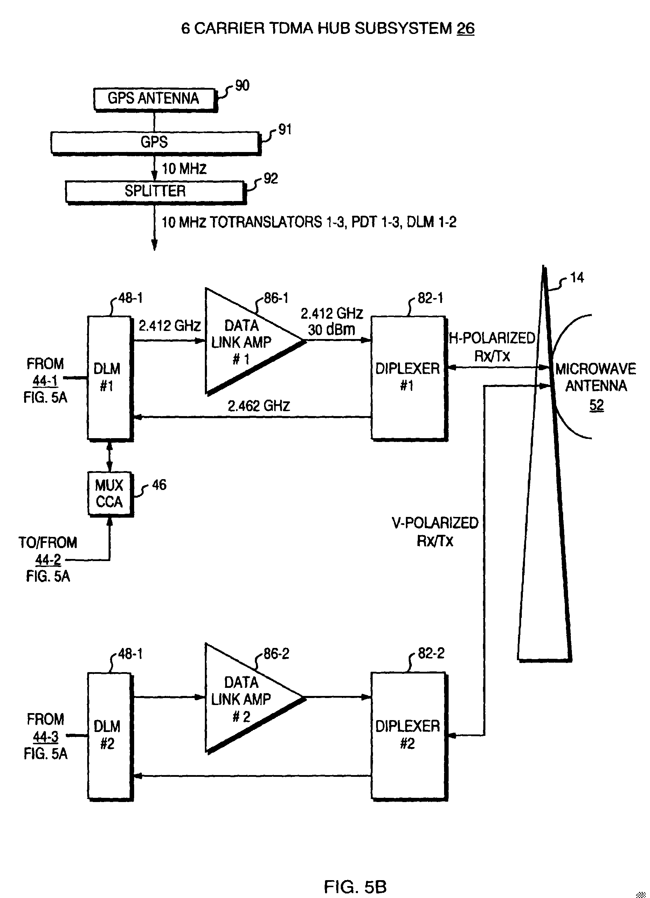

Fig. 5 is a more detailed view of a six carrier TDMA hub 26 that was described at a higher level of detail in Fig. 2. In the forward channel (FC) direction, signals received from the base transceiver station 22 are first fed to a coupler or high power loading circuit 94. This circuit simulates the load which the BTS equipment 22 is normally designed to handle when transmitting over the air. The output signal from this coupler 94 is then fed to a high power six way splitter 95 to distribute the six forward channels FC1 and FC2 are forwarded to translator 40-1, forward channels FC3 and FC4 to translator 40-2, and forward channels FC5 and FC6 to translator 40-3.

After down conversion to the intermediate frequency range, the forward channels FC1 and FC2 are fed to the respective A to D converter 42-1 and digital filter 44-1, as previously described. The digital filter 44-1 may have associated with it an Ethernet or RS232 connection for configuration management. The forward channel signals are then fed to the data link module 48-1 which provides the digitized data signal at the 2.412 GHz carrier as previously described. The data link amplifier 86-1 amplifies the signal for suitable transmission through the duplexer 82-1 onto the horizontally polarized feed of the microwave antenna 52 supported on the tower 14.

Analogous processing by the translator 40-2 of the forward channels FC3 and FC4 present signals on the horizontally polarized data link carrier through the multiplexer 46. In this particular embodiment, the multiplexer combines the signals from the first and second signal chain rather than from the second and third signal chain as shown in Fig. 2.

The forward channels FC5 and FC6 are similarly processed by the translator 40-3, A to D converter 42-3, and digital filter 44-3 through the data link module 48-2 and second data link amplifier 86-2 through the duplexer 82-2 to the vertically polarized fed of the microwave antenna 52.

A global positioning system (GPS) antenna, GPS receiver 91, and signal splitter 92 provide a convenient fixed stable frequency and phase reference such as at 10 MHz to the translators 40, digital filters 44, and data link modules 48.

In the reverse direction, the data link signals received from the microwave antenna are fed to the duplexer 82-1 at the 2.462 GHz carrier. These signals are then processed through the data link module 48-1, digital filter 44-1, and through the D to A process by converter 42-1. Both primary and diversity reverse channels are produced for each carrier so that a first primary reverse channel RC1P and first diversity reverse channel RC1D are produced as well as a second primary received channel RC2P and second diversity reverse channel RC2D.

Analogously, the converter 42-2 produces reverse channels RC3P, RC3D, RC4P, and RC4D on a similar fashion converter 42-3 produces received channels RC5P, RC5D, RC6P, and RC6D.

The reverse channels are processed through their respective translators 40-1, 40-2, 40-3, and routed to combiners 96-1 and 96-2. The primary reverse channel combiner 96-1 receives each of the primary channels and RC1P, ..., RC6P, combining them into a single primary reverse channel which is then forwarded to the reverse channel input of the BTS 22. Likewise, the reverse diversity channels RC1D, RC2D, ..., RC6D are fed through the reverse channel combiner 96-2 to produce the reverse channel diversity signal RCD fed to the BTS equipment 22.

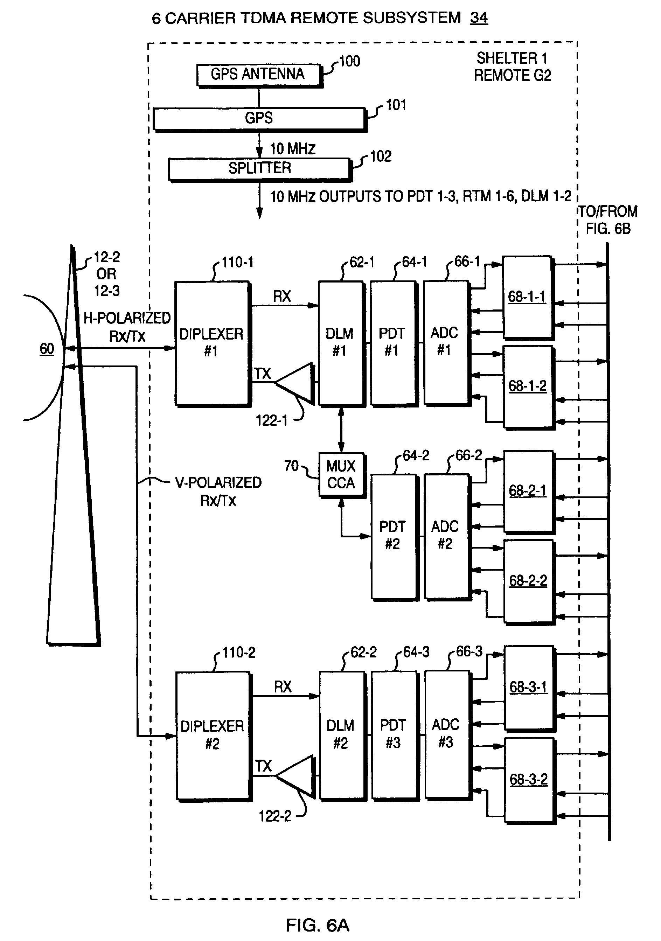

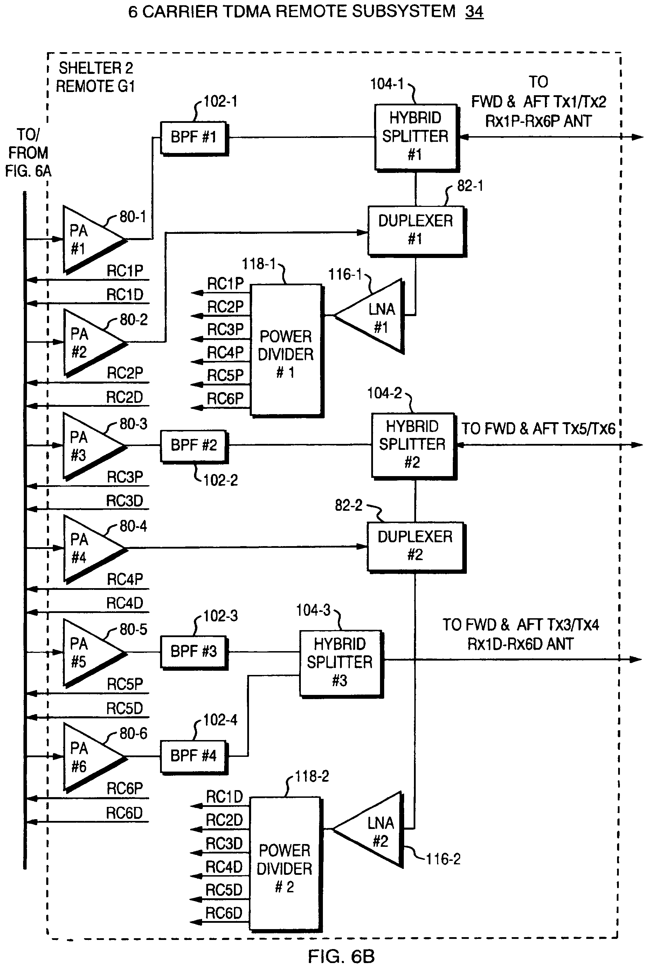

A six carrier TDMA remote subsystem 34 is shown in greater detail in Fig. 6. This equipment is deployed at either the west tower 12-2 or east tower 12-3. In the first signal chain, the horizontally polarized signal received from the dish antenna 60 in the forward channel direction is fed through the duplexer 110-1 to the received side (RX) of the data link module 62-1. Converting the 2.4 GHz data link signal down to baseband, the digital filter 64.1 and D to A converter 66-1 feeds the translator 68-1-1 and 68-1-2 in a manner as previously described in connection with Fig. 3. The first and second translated output channels are then fed to power amplifiers 80-1 and 80-2. The first channel fed from the power amplifier 80-1 is fed through a band pass filter 102-1 and hybrid splitter 104-1 to provide a forward signal RX1P to the antenna TX1 and TX2. The signal fed from the power amplifier 80-2 is fed through the duplexer 82-1 and hybrid splitter 140 to the antennas.

Operation of the second and third stage elements is analogous.

In a reverse link direction, signals received from the antenna are fed through the hybrid splitter 104-1, duplexer 82-1, through low noise amplifier 116-1 to a power divider 118-1. The power divider provides the primary channel reverse link signals RC1P, RC2P, ..., RC6P. Similarly, a low noise amplifier 116-2 and power divider 118-2 feed the signal received from the antenna through the hybrid splitter 104-2 and duplexer 82-2 to provide the reverse channel diversity signals RC1D, RC2D, ..., RC6D. These respective reverse channel signals, both primary and diversity, are fed to the translators 68-1-1, 68-1-2, ..., 68-3-2 as illustrated. After down conversion to baseband and A to D conversion, the filtered signals are then fed through the data link modules 62-1 and 62-2 through transmit amplifiers 122-1 and 122-2 through the duplexers 110-1 and 110-2 on a respective one of the horizontally polarized or vertically polarized channels.

While this invention has been particularly shown and described with references to preferred embodiments thereof, it will be understood by those skilled in the art that various changes in form and details may be made therein without departing from the spirit and scope of the invention as defined by the appended claims.

## Claims

1. A wireless communication system in which mobile subscriber units transmit and receive traffic signals to and from base station equipment, comprising:
(a) a remote cell site comprising:
(i) a first downconverter for accepting traffic signals received a subscriber unit located within a radio coverage area of the remote cell site, the traffic signals received on a licensed cellular radio frequency carrier, and the first downconverter producing a translated traffic signal;
(ii) a bandlimiter, for accepting the translated traffic signal and producing a bandlimited traffic signal;
(iii) a broadband modulator, for accepting the bandlimited traffic signal and producing a broadband modulated traffic signal; and
(iv) a first upconverter, for upconverting the broadband modulated traffic signal to an unlicensed radio frequency carrier in an unlicensed radio band as a data link signal and for transmitting the data link signal towards a hub site;
(b) the hub site comprising:
(i) a second downconverter for receiving the data link signal and providing a received data link signal;
(ii) a broadband demodulator for accepting the received data link signal and producing a demodulated traffic signal; and
(iii) a second upconverter for accepting the demodulated traffic signal and translating it to a licensed cellular radio frequency carrier and for coupling such translated signal to the base station equipment.

2. The system of claim 1 wherein the first downconverter downconverts the received traffic signal from a carrier in a Personal Communication Services (PCS) band to an intermediate frequency carrier.

3. The system of claim 2 wherein the first upconverter upconverts the broadband modulated traffic signal from the intermediate frequency carrier to a carrier in an unlicensed frequency band.

4. The system of claim 2 wherein the frequency of the intermediate frequency carrier is about 10 MegaHertz.

5. The system of claim 2 wherein the frequency of the intermediate frequency carrier is a baseband quadrature carrier.

6. The system of claim 1 wherein the second downconverter downconverts the data link signal from a carrier in an unlicensed frequency band to an intermediate frequency carrier.

7. The system of claim 6 wherein the second upconverter upconverts the broadband modulated traffic signal from the intermediate frequency carrier to a carrier in a Personal Communication Services (PCS) band.

8. The system of claim 6 wherein the frequency of the intermediate frequency carrier is about 5 MegaHertz.

9. The system of claim 6 wherein the frequency of the intermediate frequency carrier is a baseband quadrature carrier.

10. The system of claim 1 wherein the broadband modulator is a spread spectrum modulator.

11. The system of claim 1 wherein the broadband demodulator is a spread spectrum demodulator.

12. The system of claim 1 wherein the data link signal is a quadrature phase shift keyed (QPSK) modulated signal.

13. The system of claim 12 wherein the data link signal further comprises in-phase and quadrature channels to provide full duplex transmission of signals between the mobile subscriber units and the base station.

14. The system of claim 1 wherein the data link signal carries first and second channels of a full duplex channel pair on different orthogonal transmit polarizations.

15. The system of claim 1 wherein the broadband modulated traffic signal has an information bandwidth of at least twice a bandwidth of the bandlimited traffic signal, and wherein the remote cell site additionally comprises:
(i) a multiplexer, for multiplexing two broadband modulated traffic signals onto a common unlicensed radio frequency carrier.

16. The system of claim 15 wherein the hub site additionally comprises:
(i) a demultiplxer, for separating the two multipexed broadband modulated traffic signals from the common unlicensed radio frequency carrier.

17. The system of claim 1 wherein the system receives and processes both a primary traffic signal and a diversity traffic signal for each traffic signal, and the hub site additionally comprises:
(i) a plurality of signal power combining networks, for combining primary and diversity traffic signals associated with a plurality of traffic signal channels onto respective primary and diversity signal paths fed to each of a plurality of respective second downconverters.

18. The system of claim 1 wherein the system receives and processes both a primary traffic signal and a diversity traffic signal for each traffic signal, and the remote cell additionally comprises:
(i) a plurality of signal power dividing networks, for dividing primary and diversity traffic signals associated with a plurality of traffic signal channels onto respective primary and diversity signal paths fed to each of a plurality of respective first downconverters.
